(19) **Europäisches Patentamt**
**European Patent Office**
**Office européen des brevets**

(11) **EP 3 775 761 B1**

(12) **FASCICULE DE BREVET EUROPEEN**

(45) Date de publication et mention
de la délivrance du brevet:
**23.02.2022 Bulletin 2022/08**

(21) Numéro de dépôt: **19715506.2**

(22) Date de dépôt: **10.04.2019**

(51) Classification Internationale des Brevets (IPC):
**G01B 11/16** (2006.01)    **G01D 5/26** (2006.01)

(52) Classification Coopérative des Brevets (CPC):
**G01B 11/16; G01D 5/266; G01D 5/268**

(86) Numéro de dépôt international:
**PCT/EP2019/059047**

(87) Numéro de publication internationale:
**WO 2019/197447 (17.10.2019 Gazette 2019/42)**

(54) **CAPTEUR À FIBRE OPTIQUE DE MESURE DE DÉFORMATION EN ENVIRONNEMENT SÉVÈRE**

GLASFASERSENSOR ZUR MESSUNG VON DEFORMATION IN RAUEN UMGEBUNGEN

OPTICAL FIBRE SENSOR FOR MEASURING DEFORMATION IN A HARSH ENVIRONMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.04.2018 FR 1853233**

(43) Date de publication de la demande:
**17.02.2021 Bulletin 2021/07**

(73) Titulaire: **Commissariat à l'Energie Atomique et
aux Energies
Alternatives
75015 Paris (FR)**

(72) Inventeurs:
• **CHEYMOL, Guy**
**91440 BURES SUR YVETTE (FR)**
• **REMY, Laurent**
**91400 ORSAY (FR)**

(74) Mandataire: **Marks & Clerk France
Immeuble "Visium"
22, avenue Aristide Briand
94117 Arcueil Cedex (FR)**

(56) Documents cités:
**EP-A2- 1 014 064    FR-A1- 2 929 701
US-A- 5 345 519    US-A1- 2013 083 314**

## Description

Le domaine de l'invention est celui des capteurs de mesure de déplacement fonctionnant en environnement sévère. On entend par environnement sévère celui qui règne à l'intérieur des réacteurs nucléaires. Il est caractérisé par des températures élevées, de l'ordre de plusieurs centaines de degrés et des niveaux de radiations intenses tant au niveau du rayonnement gamma que des doses de neutrons supportées.

L'instrumentation nucléaire pour les irradiations en réacteur de recherche fait appel à un certain nombre de mesures. On citera les mesures de température, de flux neutroniques, de rayonnement Gamma et d'élongation de certaines pièces en test dans le réacteur. Ces dernières mesures d'allongement sont essentiellement réalisées par des capteurs inductifs. Ces mesures peuvent également être réalisées par des capteurs à fibre optique qui présentent comme principaux avantages d'être moins encombrants, moins intrusifs et plus précis que les capteurs précédents.

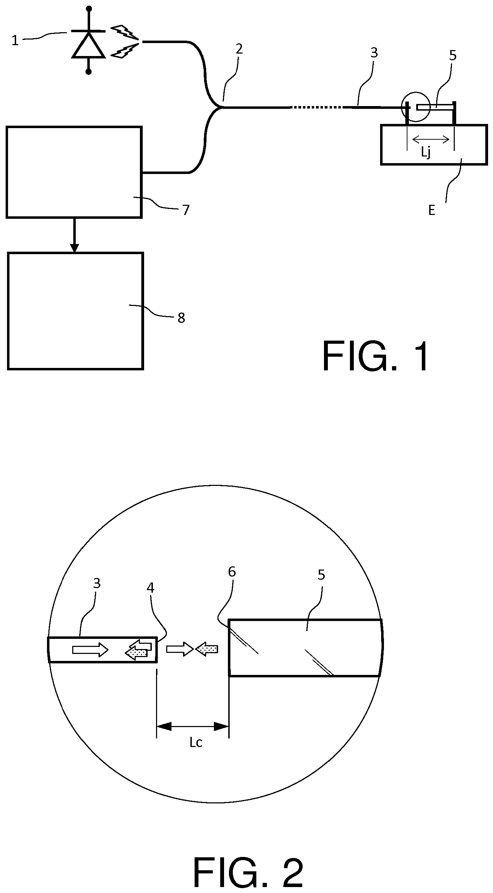

Ces capteurs optiques sont de type Fabry-Perot en lumière blanche. Le principe de fonctionnement des capteurs adaptés aux fortes température et radiations est exposé sur les figures 1, 2 et 3. La figure 1 représente le synoptique général d'un capteur de ce type. Il comporte une source de lumière 1 à spectre large, une partie du flux émis par cette source est envoyée dans la fibre optique de mesure 3 au moyen d'un coupleur optique en Y noté 2. Devant l'extrémité 4 de cette fibre optique, on a disposé une tige cylindrique 5 dans l'axe de la fibre optique. L'extrémité de la fibre et la tige sont rendus solidaires d'un échantillon E à mesurer par des liaisons ponctuelles qui ne produisent pas de contraintes excessives dans le matériau. Elles sont séparées par une longueur définissant la longueur de jauge Lj.

L'extrémité 4 située au plus près de la fibre optique est réfléchissante. La figure 2 représente une vue agrandie de cette partie du capteur. L'extrémité de la fibre optique et l'extrémité 6 de la tige 5 en regard constituent une cavité Fabry-Pérot de longueur Lc. La variation de la longueur Lj que l'on cherche à mesurer est égale à la variation de Lc. A titre d'ordre de grandeur, cette distance Lc vaut environ 100 microns. Sur la figure 2, les flèches représentent les différents signaux optiques émis et réfléchis. Une partie du signal optique est réfléchie par l'extrémité de la fibre optique. Une seconde partie du signal optique est réfléchie par la tige. Ces deux signaux se superposent et forment un système d'interférences.

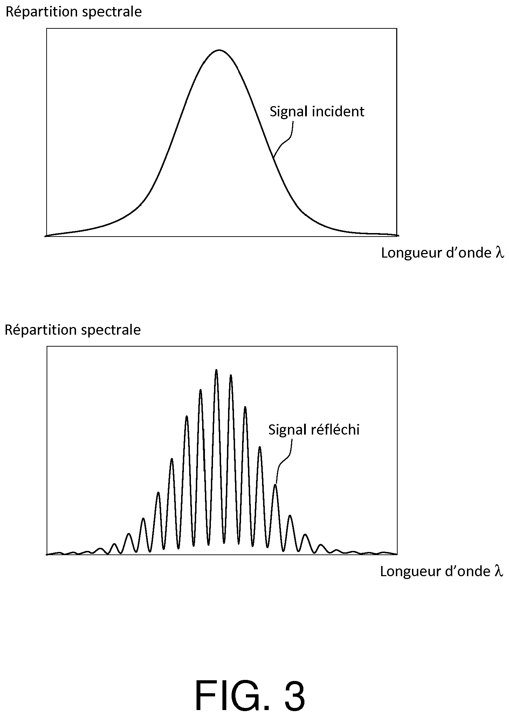

Les deux signaux réfléchis ayant subi des parcours différents sont déphasés. Ce déphasage dépend de la longueur d'onde λ du signal et de la distance Lc. On obtient un signal optique dont le spectre présente des maxima et des minima périodiques comme représenté sur la figure 3. Cette figure 3 comporte deux représentations. Celle du haut représente la répartition spectrale de la source à l'émission en fonction de la longueur d'onde λ et celle du bas, la répartition spectrale du signal réfléchi en fonction de la longueur d'onde λ. Le spectre réfléchi est dit « cannelé ». Le spectre est analysé par un spectromètre 7 comme on le voit sur la figure 1. De la position des cannelures, les moyens d'analyse et de mesure 8 déduisent facilement la distance L. A titre d'exemple, la source de lumière est une diode de type « SLED », acronyme signifiant « Superluminescent Light Emitting Diode » émettant à une longueur d'onde voisine de 960 nanomètres et dont la largeur du spectre d'émission vaut environ 50 nanomètres. Si la distance Lc vaut 100 microns, on obtient ainsi une dizaine de cannelures exploitables.

Plus précisément, le nombre Δk de franges brillantes entières ou de franges sombres entières entre deux longueurs d'onde λ1 et λ2 connues, la longueur d'onde λ2 étant supérieure à la longueur d'onde λ1, est reliée à la longueur de cavité $L_C$ selon la formule :

$$Lc = \frac{\Delta k}{2\left(\frac{1}{\lambda 1} - \frac{1}{\lambda 2}\right)}$$

Un capteur de ce type doit avoir une précision de l'ordre du micron. La réalisation du capteur doit être simple de façon à assurer sa résistance aux environnements extrêmes, tout en garantissant la précision des mesures. Il comporte généralement une tête optique et un transport à fibre optique. Le transport permet de déporter la mesure jusqu'à une zone où les contraintes d'irradiation et de température ont fortement baissé.

La tête optique proprement dit, c'est-à-dire la partie du capteur comportant la cavité Fabry-Perot est généralement insérée dans une encapsulation métallique. L'extrémité de la fibre et la tige sont fixées à cette encapsulation métallique par deux premiers points d'ancrage. Le tube est rendu solidaire de l'objet dont on cherche à mesurer l'élongation par deux seconds points d'ancrage. On trouvera dans le brevet FR 2 929 701 intitulé « Capteur d'allongement à fibre optique » des informations complémentaires sur la réalisation de cette tête optique.

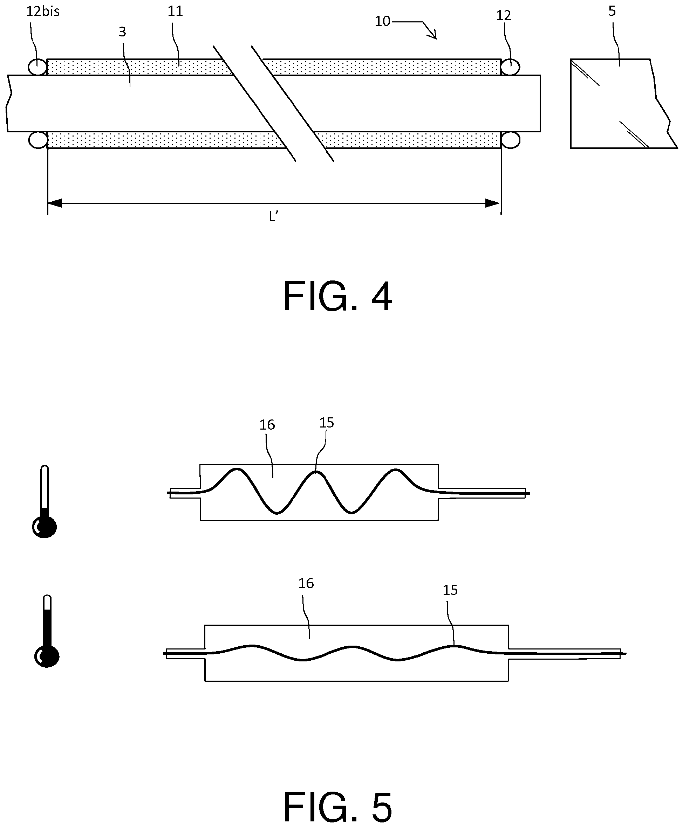

La conception la plus simple et la plus robuste du transport optique 10 est représentée sur la figure 4. Elle consiste à protéger la fibre optique 3 par une gaine 11 d'acier inoxydable d'une longueur L'. La fibre est maintenue dans sa gaine par des points de colle céramique 12 et 12bis comme on le voit sur la figure 4. Le second point de fixation 12bis entre la gaine d'acier et la tête optique, qui correspond au point de fixation le plus éloigné de la tête optique, se situe dans une zone où la température et les radiations sont fortement réduites par rapport à la zone dans laquelle se situent la tête optique et l'échantillon. Ce second point de fixation entre la gaine d'acier et la tête optique est robuste et absorbe les diverses contraintes transmises par la fibre pendant les phases de fabrication, de montage et de tests qui pourraient se transmettre au point de fixation 12 proche de la cavité. En effet, le premier point de fixation 12 entre la gaine d'acier et la tête optique est moins volumineux et moins résistant. Le second point de fixation 12bis entre la gaine d'acier et la tête optique évite ainsi de détériorer le premier point de fixation 12, engendrant une modification de la longueur de cavité Lc pendant la phase de mesure.

Une façon d'éviter que des contraintes ne s'appliquent sur l'extrémité de fibre est proposée dans le brevet US 2006/0233484 intitulé « Adhesive-assembled fiber-optic interferometer ». Cette solution présente un assemblage comportant une seconde cavité qui n'a pas de fonction de mesure mais découple mécaniquement la cavité de mesure de la fibre optique reliant la cavité de mesure à l'instrumentation. Il y a un seul point de fixation sur le segment entre les deux cavités.

Cette solution ne convient pas pour un fonctionnement en environnement sévère. En effet, lorsque ce transport est soumis aux environnements sévères du capteur, deux phénomènes se produisent : la gaine d'acier se dilate davantage que la fibre sous l'effet de la chaleur et la fibre optique se rétracte sous l'effet des radiations neutroniques intenses. On appelle ce dernier phénomène « compaction ». Les fibres optiques utilisées sont en silice. Le différentiel de longueur résultant peut atteindre plus de 1 pour cent de variation relative. Pour disposer cette seconde cavité dans une zone où la température et les radiations sont fortement réduites, il faut augmenter la distance entre les deux cavités. Le différentiel de longueur entre la fibre et la gaine métallique peut alors entrainer, selon la position du seul point de fixation, une dérive de la cavité Fabry Perot de mesure ou une forte variation de la longueur de la seconde cavité, qui empêche une bonne transmission du signal sur cette seconde cavité, ces deux effets néfastes pouvant se produire simultanément.

Si les deux extrémités du transport comportent deux points de fixation, les tensions engendrées risquent de modifier la longueur de cavité Lc et de détériorer la fixation proche de la cavité.

Pour résoudre le problème, une solution possible est de créer, lors du montage à température ambiante, une réserve de dilatation dans le transport optique de façon que la fibre optique puisse se rétracter librement sans créer de contraintes au niveau des attaches de sa gaine ou de son enveloppe de protection. La solution proposée tient compte du faible volume disponible en particulier à proximité de l'échantillon et de la nécessité d'éviter de rapporter une masse thermique élevée près du capteur.

La solution est représentée en figure 5 à deux températures différentes symbolisées à gauche de la figure par des thermomètres. La fibre optique 15 est maintenue dans une enceinte 16 fermée dont la largeur est supérieure au diamètre de la fibre optique. A froid, la fibre optique forme un serpentin comme on le voit sur la représentation du haut de la figure 5. A chaud, comme on le voit sur la représentation du bas de la figure 5, la boîte 16 se dilate, ainsi que la gaine d'acier inoxydable du transport à laquelle il est relié et le serpentin de la fibre optique 15 s'étire sans créer de tractions sur les points de fixation. Un des inconvénients de ce système est qu'il existe un risque que lors des divers cycles thermiques la fibre optique s'accroche aux parois de la boîte au lieu de reprendre la forme idéale dessinée, il peut alors se former une forte courbure locale pouvant endommager la fibre. Il est important que la fibre optique ne puisse s'appuyer localement sur les parois.

Le boitier ou l'étui de réserve de dilatation selon l'invention ne présente pas ces inconvénients. Sa forme est étudiée pour ne contenir qu'une seule arche de fibre optique, quel que soit le différentiel de longueur entre fibre et gaine d'acier inoxydable, de façon à minimiser au mieux les frottements et les accroches possibles de la fibre optique sur les parois du boitier pendant les phases de fonctionnement en environnement sévère pendant lesquelles la fibre optique peut se compacter et subir des cycles thermiques.

Plus précisément, l'invention a pour objet un capteur à fibre optique de mesure de déformation destiné à fonctionner dans une plage de température de quelques centaines de degrés, ledit capteur comportant une tête optique de mesure à cavité Fabry-Perot, une fibre optique de transport et un étui de réserve de dilatation, ledit étui comportant un segment de ladite fibre optique de transport, caractérisé en ce que l'épaisseur intérieure de l'étui est comprise entre un et quelques millimètres, ledit étui étant plat et en forme dite de chapeau de gendarme, ladite forme comportant une partie centrale convexe et deux extrémités symétriques concaves, la fibre optique libre de former à l'intérieur du chapeau une et une seule arche, le segment de la fibre optique étant, au plus, tangent aux surfaces internes de l'étui de réserve, quelles que soient les conditions de température.

Avantageusement, la fibre optique est en silice, elle comporte un gainage en aluminium et l'étui est en acier inoxydable.

Avantageusement, la hauteur de l'étui de réserve de dilatation est environ le quart de sa largeur.

Avantageusement, la hauteur de l'étui de réserve de dilatation est d'environ 20 millimètres.

Avantageusement, le maintien de la fibre optique à l'extrémité du transport la plus éloignée de la tête optique de mesure est réalisé par une colle céramique haute température à proximité de la sortie de l'étui.

L'invention sera mieux comprise et d'autres avantages apparaîtront à la lecture de la description qui va suivre donnée à titre non limitatif et grâce aux figures annexées parmi lesquelles :

La figure 1 représente le synoptique général d'un capteur de déplacement à cavité Fabry-Pérot ;
La figure 2 représente une vue agrandie de la cavité Fabry-Pérot et de son fonctionnement ;
La figure 3 représente le spectre de la source d'émission avant et après traversée de la cavité Fabry-Pérot ;

La figure 4 représente une vue en coupe du transport optique ;

La figure 5 représente un mode de réalisation d'une réserve de dilatation selon l'art antérieur ;

La figure 6 représente un mode de réalisation d'une réserve de dilatation selon l'invention ;

La figure 7 représente le fonctionnement de la réserve de dilatation selon l'invention.

Le capteur à fibre optique de mesure d'allongement selon l'invention comporte une tête optique de mesure à cavité Fabry-Pérot tel que précédemment décrit, une fibre optique de transport et une réserve de dilatation à fibre optique spécifique. Typiquement, ce capteur est agencé de façon à mesurer des allongements de l'ordre de 150 microns sur une longueur de jauge de 15 mm avec une précision du micron.

Ce capteur optique est tout particulièrement destiné à fonctionner en environnement sévère. Cet environnement est caractérisé par des températures élevées, de l'ordre de plusieurs centaines de degrés, et des niveaux de radiations intenses tant au niveau du rayonnement gamma que des doses de neutrons supportées

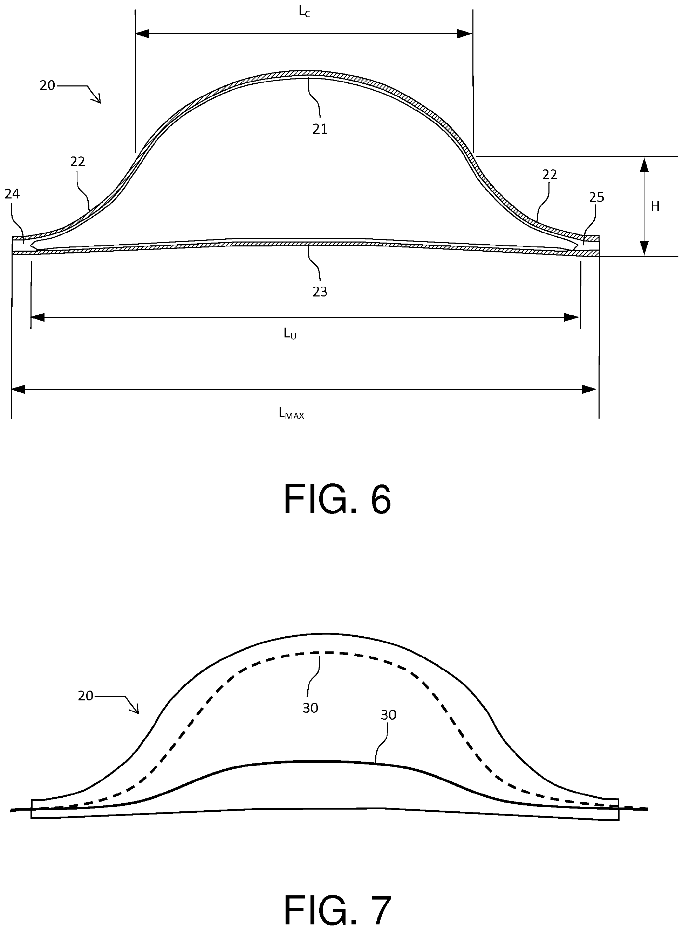

La figure 6 représente une vue en coupe de cette réserve de dilatation 20 à fibre optique. Cette réserve de dilatation a la forme d'un étui creux et plat de faible épaisseur comportant un segment de la fibre optique de transport. Plus précisément, l'épaisseur interne de l'étui est voisine du diamètre de la fibre optique de transport. Cette fibre optique n'est pas représentée sur la figure 6.

Cet étui a une forme dite en « chapeau de gendarme », la partie haute de cette forme comportant une partie centrale convexe 21 et deux extrémités symétriques concaves 22, la fibre optique étant maintenue à une des deux extrémités 24 de l'étui et passant par la seconde extrémité 25 de l'étui, la fibre optique formant à l'intérieur du chapeau une et une seule arche dont la hauteur varie avec la dilatation ou la compaction de la fibre optique. La partie basse 23 de l'étui est faiblement concave.

La géométrie de cet étui peut être caractérisée par un certain nombre de dimensions qui sont sa longueur $L_U$ hors embouts d'assemblage, sa longueur maximale $L_{MAX}$, sa hauteur H au point d'inflexion séparant les parties concaves de la partie convexe, la longueur de la partie convexe $L_C$. A titre d'exemple non limitatif, un étui selon l'invention peut avoir les caractéristiques géométriques suivantes, arrondies au dixième de millimètre :

| | |
|---|---|
| Longueur $L_{MAX}$ : | 66.0 mm |
| Longueur $L_U$ : | 60.0 mm |
| Hauteur H : | 9.2 mm |
| Longueur $L_C$ : | 38.3 mm |

(suite)

| | |
|---|---|
| Epaisseur intérieure | : 1.2 mm |
| Epaisseur totale : | 2.5 mm |

Le matériau de l'étui doit être choisi de façon à résister aux environnements sévères des capteurs tels que décrits précédemment. Il peut être réalisé en acier inoxydable, la fibre optique étant réalisée en silice et comportant un revêtement en aluminium.

Ce boitier peut être réalisé en impression 3D par la technique de fusion sélective par laser, connue sous le terme de « SLM », acronyme signifiant « Selective Laser Melting ».

Le maintien de la fibre optique à l'extrémité du transport la plus éloignée de la tête optique de mesure est réalisé, à 30 mm de la sortie de l'étui, par une colle céramique résistant à haute température, de l'ordre de quelques centaines de degrés.

L'étui de réserve de dilatation est éloigné de la tête optique d'au moins 500 millimètres de façon que son échauffement propre ne parasite pas la mesure d'élongation réalisée par la tête optique, à une position telle qu'au-delà du point de fixation fibre/gaine éloigné de la tête optique, la dilatation thermique et la compaction soient négligeables, et telle que l'encombrement de cet étui soit acceptable à cette position. Le fonctionnement de cet étui est représenté sur la figure 7. Sur cette figure, on a représenté une vue en coupe de l'étui 20 et la fibre optique 30 à deux températures. La courbe en traits pointillés est représentative de la position de la fibre optique à basse température et la courbe en trait plein est représentative de la position de la fibre optique à haute température. Ces deux courbes sont en forme d'arche. Lorsque la température monte, la fibre optique subit deux phénomènes comme il a été dit, une dilatation plus faible que la gaine du transport et une compaction sous l'effet des radiations. Au final, sa longueur dans l'étui varie et cette variation de longueur est absorbée par la hauteur de l'arche. Un étui tel que défini précédemment peut absorber une variation différentielle entre la dilatation et la compaction maximale de 12 millimètres.

L'intérêt de cette forme en arche est que la fibre optique se déplace à l'intérieur de l'étui sans frottement important de façon à éviter tout risque d'accroche de la fibre optique susceptible de créer des contraintes mécaniques excessives sur la fibre optique. La fibre optique reste, au plus, tangente aux surfaces avec lesquelles elle est en contact. Le capteur peut ainsi subir un grand nombre de cycles thermiques sans détérioration, augmentant ainsi sa durée de vie et sa fiabilité de façon significative.

**Revendications**

1. Capteur à fibre optique de mesure de déformation destiné à fonctionner dans une plage de température de quelques centaines de degrés, ledit capteur comportant une tête optique de mesure à cavité Fabry-Perot, une fibre optique de transport et un étui (20) de réserve de dilatation, ledit étui comportant un segment de ladite fibre optique de transport, **caractérisé en ce que** l'épaisseur intérieure de l'étui est voisine du diamètre de la fibre optique de transport, ledit étui étant plat et en forme dite de chapeau de gendarme, ladite forme comportant une partie centrale convexe (21) et deux extrémités symétriques concaves (22), la fibre optique étant libre de former à l'intérieur du chapeau une et une seule arche, le segment de la fibre optique étant, au plus, tangent aux surfaces internes de l'étui de réserve, quelles que soient les conditions de température.

2. Capteur à fibre optique selon la revendication 1, **caractérisé en ce que** la fibre optique est en silice, qu'elle comporte un gainage en aluminium et que l'étui est en acier inoxydable.

3. Capteur à fibre optique selon l'une des revendications précédentes, **caractérisé en ce que** la hauteur de l'étui de réserve de dilatation est le quart de sa largeur.

4. Capteur à fibre optique selon la revendication 3, **caractérisé en ce que** la hauteur de l'étui de réserve de dilatation est 20 millimètres.

5. Capteur à fibre optique selon l'une des revendications précédentes, **caractérisé en ce que** le maintien de la fibre optique à l'extrémité du transport la plus éloignée de la tête optique de mesure est réalisé à proximité de la sortie de l'étui par une colle céramique haute température, de l'ordre de quelques centaines de degrés.

**Patentansprüche**

1. Glasfasersensor zur Messung von Verformung, bestimmt zum Funktionieren in einem Temperaturbereich von einigen Hundert Grad, wobei der Sensor einen optischen Messkopf mit Fabry-Perot-Hohlraum, eine Transportglasfaser und ein Dehnungsserveetui (20) aufweist, wobei das Etui ein Segment der Transportglasfaser aufweist, **dadurch gekennzeichnet, dass** die innere Dicke des Etuis nahe am Durchmesser der Transportglasfaser liegt, wobei das Etui flach ist und die Form eines sogenannten Gendarmenhuts aufweist, wobei die Form einen mittleren konvexen Teil (21) und zwei symmetrische konkave Enden (22) aufweist, wobei die Glasfaser frei ist, um im Innern des Hutes einen einzigen Bogen zu bilden, wobei das Segment der Glasfaser die inneren Flächen des Reserveetuis unabhängig von den Temperaturbedingungen höchstens tangiert.

2. Glasfasersensor nach Anspruch 1, **dadurch gekennzeichnet, dass** die Glasfaser aus Silizium besteht, eine Ummantelung aus Aluminium aufweist und das Etui aus rostfreiem Stahl besteht.

3. Glasfasersensor nach einem der vorhergehenden Ansprüche, **dadurch gekennzeichnet, dass** die Höhe des Dehnungsreserveetuis ein Viertel seiner Breite beträgt.

4. Glasfasersensor nach Anspruch 3, **dadurch gekennzeichnet, dass** die Höhe des Dehnungsreserveetuis 20 Millimeter beträgt.

5. Glasfasersensor nach einem der vorhergehenden Ansprüche, **dadurch gekennzeichnet, dass** der Halt der Glasfaser an dem am weitesten vom optischen Messkopf entfernte Ende des Transports in der Nähe des Ausgangs des Etuis durch einen keramischen Klebstoff für hohe Temperaturen hergestellt wird, in der Größenordnung von einigen Hundert Grad.

**Claims**

1. A fibre-optic sensor for measuring deformation intended to operate in a temperature range of a few hundred degrees, said sensor having a Fabry-Perot-cavity- based optical measurement head, a linking optical fibre and an expansion reserve case (20), said case having a segment of said linking optical fibre, **characterised in that** the inner thickness of the case is proximate to the diameter of the linking optical fibre, said case being flat and of so-called bicorne shape, said shape having a convex central portion (21) and two concave symmetric ends (22), the optical fibre being free to form, inside the bicorne, one and only one arch, the segment of the optical fibre being, at most, tangent to the inner surfaces of the reserve case, whatever the temperature conditions.

2. The fibre-optic sensor according to claim 1, **characterised in that** the optical fibre is made of silica, **in that** it has a sleeve made of aluminium and **in that** the case is made of stainless steel.

3. The fibre-optic sensor according to one of the preceding claims, **characterised in that** the height of the expansion reserve case is one quarter of its width.

4. The fibre-optic sensor according to claim 3, **characterised in that** the height of the expansion reserve case is 20 millimetres.

5. The fibre-optic sensor according to one of the preceding claims, **characterised in that**, at the link end that is furthest from the optical measurement head, the optical fibre is held in proximity to the exit of the case by a high-temperature ceramic adhesive, this high temperature being of about a few hundred degrees.

FIG. 1

FIG. 2

Répartition spectrale

Signal incident

Longueur d'onde λ

Répartition spectrale

Signal réfléchi

Longueur d'onde λ

# FIG. 3

FIG. 4

FIG. 5

# FIG. 6

# FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2929701

- US 20060233484 A